# EUROPÄISCHE PATENTSCHRIFT

(11) **EP 3 516 265 B1**
(45) Veröffentlichungstag und Bekanntmachung des Hinweises auf die Patenterteilung: **08.11.2023**
(21) Anmeldenummer: 17767836.4
(22) Anmeldetag: 15.09.2017
(51) Int. Cl.: F16H 47/08

(54) **VERFAHREN ZUM SCHALTEN EINES KLAUENSCHALTELEMENTS**
METHOD FOR PERFORMING SHIFTS IN A DOG CLUTCH ELEMENT
PROCÉDÉ PERMETTANT DE COMMUTER UN ÉLÉMENT DE CHANGEMENT DE VITESSES À GRIFFES

(30) Priorität: 21.09.2016 DE 102016218115
(43) Veröffentlichungstag der Anmeldung: 31.07.2019
(73) Patentinhaber: Voith Patent GmbH, 89522 Heidenheim (DE)
(72) Erfinder: LAZARENKA, Vitali, 73433 Aalen (DE); LINDENMAIER, Herr Jochen, 89542 Herbrechtingen (DE); GROSS, Bernd, 89518 Heidenheim (DE); GÖTTE, Herr Johannes, 89537 Giengen (DE)
(74) Vertreter: Voith Patent GmbH - Patentabteilung
(86) Internationale Anmeldenummer: PCT/EP2017/073269
(87) Internationale Veröffentlichungsnummer: WO 2018/054773

(56) Entgegenhaltungen:
- EP-A1- 0 492 152
- WO-A1-2009/149840
- WO-A1-2015/076723
- DE-A1- 19 901 414
- DE-A1-102006 019 239
- DE-A1-102014 208 873
- US-A1- 2008 125 287

## Beschreibung

Die Erfindung betrifft ein Verfahren zum Schalten eines Klauenschaltelements eines Getriebes in einem Hybridfahrzeug mit den Merkmalen im Oberbegriff des Anspruchs 1.

Hybridfahrzeuge sind soweit aus dem allgemeinen Stand der Technik bekannt. Zunehmend ist es so, dass auch bei Nutzfahrzeugen auf eine verstärkte Hybridisierung gesetzt wird. Ein üblicher Aufbau sieht es dabei vor, dass eine elektrische Maschine beispielsweise auf oder in Wirkverbindung mit der Eingangswelle eines Getriebes zwischen einer Verbrennungskraftmaschine und dem Getriebe angeordnet ist.

Ferner ist es aus dem allgemeinen Stand der Technik, und hier wiederum insbesondere aus dem Bereich der Nutzfahrzeugtechnik bekannt, dass Getriebe als Automatikgetriebe ausgebildet werden, und dennoch wenigstens ein Klauenschaltelement aufweisen. Dies kann insbesondere ein sogenannter "Overdrive" sein, also ein schneller Gang, welcher typischerweise ausgehend vom höchsten Gang des Automatikgetriebes zugeschaltet werden kann, um einen weiteren Gang zu schaffen. Dies ist beispielsweise in der DE 10 2008 027 946A1 gezeigt. So kann beispielsweise ein Vier-Gang-Automatikgetriebe zum Schalten von fünf Gängen genutzt werden. Problematisch ist bei einer derartigen Schaltung von Klauenschaltelementen einerseits die Tatsache, dass sehr schnell geschaltet werden sollte, wie dies ähnlich auch bei automatisierten Schaltgetrieben gilt, und andererseits, dass die Drehzahlen über mechanische Synchronisationseinrichtungen so angepasst werden müssen, dass die Klauenschaltelemente ineinandergreifen und zuverlässig schalten.

Diese Herausforderung einer zuverlässigen und komfortablen Schaltung von Klauenschaltelementen beispielsweise in einem Automatikgetriebe mit wenigstens einem Klauenschaltelement oder auch in automatisierten Schaltgetrieben wird typischerweise durch mechanische Synchronisationseinrichtungen gelöst. Diese greifen vor dem Ineinandergreifen der Klauenschaltelemente reibend ineinander, um so eine Anpassung der Drehzahlen zu erreichen. Prinzipbedingt führt ein häufiges Schalten bei derartigen Synchronisationseinrichtungen dann zu einem vergleichsweise großen Verschleiß und benötigt je nach Unterschied der vorliegenden Drehzahlen eine vergleichsweise lange Zeit. Bei einer Fahrt bergab oder im Ebenen stellt dies typischerweise kein Problem dar. Bei einer Fahrt bergauf können die vergleichsweise langen Schaltzeiten aufgrund der notwendigen Synchronisation durchaus als nachteilig und unkomfortabel empfunden werden. Ein weiterer Nachteil einer Synchronisation über Reibung stellt außerdem der damit einhergehende Leistungsverlust dar. Einerseits erhöht dies den Kraftstoffverbrauch des Fahrzeugs und andererseits entsteht im Bereich der Synchronsinationseinrichtungen Abwärme, welche zusammen mit der im Getriebe entstehenden Abwärme weggekühlt werden muss, was die Anforderungen an das Kühlsystem weiter erhöht. Dies verursacht ebenfalls unerwünschte Kosten und einen unerwünschten erhöhten Bauraumbedarf.

DE 102014208873 A1 gehört zum Stand der Technik und zeigt die technische Merkmale im Oberbegriff des Anspruchs 1.

Die Aufgabe der vorliegenden Erfindung besteht nun darin, ein Verfahren zum Schalten eines Klauenschaltelements in einem Getriebesystem in einem Hybridfahrzeug anzugeben, welches die genannten Nachteile vermeidet. Erfindungsgemäß wird diese Aufgabe durch ein Verfahren mit den Merkmalen im Anspruch 1 gelöst. Vorteilhafte Ausgestaltungen und Weiterbildungen ergeben sich aus den hiervon abhängigen Unteransprüchen.

Das erfindungsgemäße Verfahren zum Schalten eines Klauenschaltelements eines Getriebesystems in einem Hybridfahrzeug nutzt dabei den üblichen Aufbau eines Hybridfahrzeugs, in welchem eine Kurbelwelle einer Verbrennungskraftmaschine des Hybridfahrzeugs mit einer Eingangswelle des Getriebesystems verbunden ist. Zumindest mittelbar ist eine Ausgangswelle des Getriebesystems mit angetriebenen Rädern des Hybridfahrzeugs verbunden. Eine elektrische Maschine steht im Eingriff mit der Eingangswelle des Getriebesystems. Zwischen der Eingangswelle und der Ausgangswelle ist ein Automatikgetriebe oder ein automatisiertes Schaltgetriebe angeordnet. Teil dieses Getriebes ist wenigstens ein Klauenschaltelement zum lösbaren Koppeln von zwei Getriebeelementen.

Im Falle einer gewünschten Schaltung des Klauenschaltelements wird bei dem erfindungsgemäßen Verfahren über die elektrische Maschine das Drehmoment der Eingangswelle angepasst, und zwar so, dass im Bereich des Klauenschaltelements eine reduzierte Last anliegt und dieses ausgerückt werden kann. Die Last bzw. das Drehmoment zwischen den beiden Klauen des Klauenschaltelements wird also entsprechend reduziert, gemäß einer sehr vorteilhaften Ausgestaltung und Weiterbildung der Erfindung, zu Null. In diesem Zustand mit reduzierter Last oder gemäß der besonders vorteilhaften Weiterbildung ohne Last lässt sich das Klauenschaltelement, welches typischerweise über Hinterschneidungen mit seinem Gegenelement zusammenwirkt, dann problemlos ausrücken. Anschließend wird über die elektrische Maschine die Verbrennungskraftmaschine auf die gewünschte Zieldrehzahl abgebremst oder beschleunigt. Die elektrische Maschine des Hybridantriebs wirkt mit der Eingangswelle direkt zusammen. Entweder in direkter Anbindung oder ggf. unter Zwischenschaltung eines Drehschwingungsdämpfers und/oder einer Kupplung kann so über die elektrische Maschine auf die Verbrennungskraftmaschine eingewirkt werden. Je nach Bedarf wird diese abgebremst, wobei die elektrische Maschine generatorisch arbeitet und die frei werdende elektrische Energie in einer Energiespeichereinrichtung zwischengespeichert wird, oder die Verbrennungskraftmaschine wird entsprechend beschleunigt, wozu die elektrische Maschine mit Energie aus der Energiespeichereinrichtung motorisch betrieben wird. Sobald sich die gewünschte Zieldrehzahl, und diese ist gemäß einer besonders vorteilhaften Weiterbildung der Idee immer auf die Ausgangswelle des Getriebes bezogen, eingestellt hat, wird das Klauenschaltelement dann wieder eingerückt. Dies kann insbesondere exakt beim Erreichen der Zieldrehzahl erfolgen, oder vorzugsweise auch kurz vorher, also bei einer Drehzahldifferenz von einigen Prozent, typischerweise weniger als 10%. Das Klauenschaltelement kann dazu weiterhin seine mechanische Synchronisationseinrichtung aufweisen, um einerseits sehr schnell schalten zu können, also bereits kurz vor dem Erreichen der Zieldrehzahl eingerückt werden zu können, und um andererseits kleine Abweichungen in den Drehzahlen auszugleichen. Anders als im Stand der Technik wird diese mechanische Synchronisationseinrichtung jedoch weitaus weniger belastet, sodass weniger Abwärme und weniger Verschleiß entsteht. Außerdem lässt sich der Kraftstoffverbrauch aufgrund der geringeren Wärmeverluste hier gegenüber dem Stand der Technik reduzieren.

Das erfindungsgemäße Verfahren nutzt also die elektrische Maschine des Hybridsystems, um eine Anpassung der Drehmomente und damit mittelbar auch der Drehzahlen in der gewünschten Art und Weise vorzunehmen. In der Praxis funktioniert ein solcher "Brems-" oder "Boostbetrieb" für die Verbrennungskraftmaschine über die elektrische Maschine sehr viel schneller, als es eine direkte Ansteuerung der Verbrennungskraftmaschine zulässt. Dies gilt insbesondere dann, wenn die Verbrennungskraftmaschine entsprechend schwer regelbar ausgebildet ist. Solche schwer regelbaren Verbrennungskraftmaschinen können nun insbesondere Gasmotoren sein, welche aufgrund der bei ihnen sehr viel geringeren Rußemissionen und der geringeren Emissionen an Stickoxiden zunehmend bei Stadtverkehrsbussen und Lieferwagen innerhalb großer Ballungsräume und Städte zum Einsatz kommen. Speziell Gasmotoren sind außerordentlich komplex in der Ansteuerung und machen ein herkömmliches Verfahren sehr schwierig. Gerade hier bietet das erfindungsgemäße Verfahren den entscheidenden Vorteil, dass ohne einen gravierende Eingriff in die Steuerung der Verbrennungskraftmaschine, welche dann als Gasmotor ausgebildet ist, eine Erhöhung oder Reduktion der Drehzahl über die elektrische Maschine erfolgen kann.

Gemäß einer sehr vorteilhaften Weiterbildung des erfindungsgemäßen Verfahrens ist es dabei ferner vorgesehen, dass die Steuerung und Regelung des Schaltvorgangs des Klauenschaltelements über wenigstens eine in dem Getriebesystem integrierte Steuereinheit für das Getriebe und die Elektromaschine erfolgt. Insbesondere innerhalb des Getriebes sind die genauen Anforderungen für eine außerordentlich effiziente und schnelle Schaltung mittels des Klauenschaltelements bekannt. Anstatt diese Anforderungen aufwändig über einen Datenbus nach außerhalb des Getriebesystems zu transferieren, ist man mit dem erfindungsgemäßen Verfahren nun erstmals in der Lage, in dem Getriebesystem, welches die elektrische Maschine und das Getriebe umfasst, diese Anforderungen direkt zu erfüllen, indem getriebeseitig in der gewünschten Art und Weise auf die Verbrennungskraftmaschine eingewirkt wird, um so eine außerordentlich effiziente und schnelle Betätigung der Klauenschaltelemente zu erreichen.

Typischerweise liegen innerhalb des Getriebesystems alle relevanten Informationen vor. Gemäß einer vorteilhaften Weiterbildung des erfindungsgemäßen Verfahrens können dabei an der Eingangswelle und an der Ausgangswelle Drehzahlsensoren angeordnet sein, welche ihre erfassten Drehzahlen an die in das Getriebesystem integrierte Steuereinheit weitergeben. Vergleichbares kann gemäß einer vorteilhaften Weiterbildung der Idee auch mittels eines Neigungssensors erfolgen, welcher seine Daten ebenfalls an die in das Getriebesystem integrierte Steuereinheit weitergibt. Der Schaltvorgang lässt sich damit einer Bergauf-oder Bergabfahrt anpassen. Damit ist man alles in allem in der Lage, aus dem Getriebesystem heraus alle Daten für eine sinnvolle, effiziente und schnelle Schaltung zu generieren. Auf Basis dieser Informationen kann dann gemäß der oben beschriebenen vorteilhaften Weiterbildung wieder aus dem Getriebesystem heraus durch die in das Getriebesystem integrierte Steuereinheit das Drehmoment und die Drehzahl der Eingangswelle und damit letztlich der Verbrennungskraftmaschine angepasst werden. Ohne dass auf diese steuerungstechnisch Einfluss genommen werden muss, können so die idealen Bedingungen für eine schnelle und effiziente Schaltung durch das Getriebesystem selbst eingestellt werden.

Weitere vorteilhafte Ausgestaltungen des erfindungsgemäßen Verfahrens ergeben sich außerdem aus den restlichen abhängigen Unteransprüchen und werden nachfolgend anhand eines Ausführungsbeispiels näher beschrieben.

Die einzige beigefügte Figur zeigt ein prinzipmäßig angeordnetes Fahrzeug bzw. seinen Antriebsstrang in einer Variante, mit welcher das erfindungsgemäße Verfahren durchgeführt werden kann.

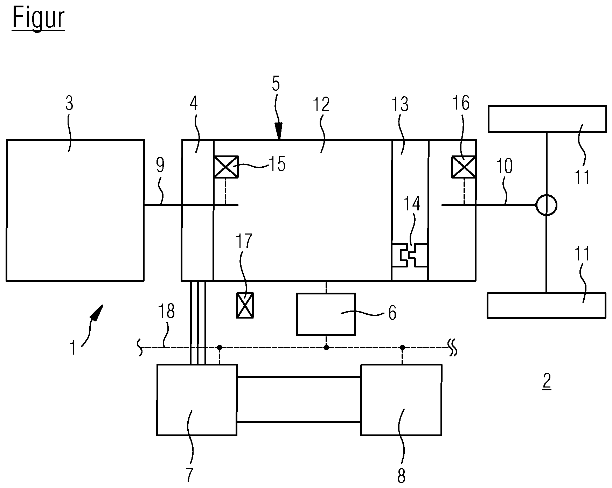

In der Darstellung der Figur ist sehr stark schematisiert ein Antriebsstrang 1 eines in seiner Gesamtheit nicht dargestellten Fahrzeugs 2 zu erkennen. Das Fahrzeug 2 soll dabei als Hybridfahrzeug, insbesondere als Nutzfahrzeug ausgebildet sein. Besonders bevorzugt kann es sich bei dem Fahrzeug 2 um einen Omnibus handeln.

Der Antriebsstrang 1 des Hybridfahrzeugs 2 umfasst eine Verbrennungskraftmaschine 3 sowie eine elektrische Maschine 4. Diese ist Teil eines Getriebesystems, welches neben einem Getriebe 5 und der elektrischen Maschine 4 außerdem eine Steuereinheit 6 sowie einen Frequenzumrichter 7 zur Ansteuerung der elektrischen Maschine 4 und eine Energiespeichereinrichtung 8, beispielsweise eine Batterie oder Superkondensatoren oder eine Kombination hiervon aufweist. Eine Eingangswelle 9 des Getriebesystems verbindet eine Kurbelwelle der Verbrennungskraftmaschine 3 mit der elektrischen Maschine 4 und dem Getriebe 5. Eine Ausgangswelle 10 des Getriebes sorgt für den Antrieb von angetriebenen Rädern 11 des Hybridfahrzeugs 2, welche hier ebenfalls angedeutet sind. Das Getriebe 5 soll in dem hier dargestellten Ausführungsbeispiel als Automatikgetriebe in Form eines Differenzialwandlergetriebes 12 ausgebildet sein, welches einen diesem Differenzialwandlergetriebe 12 nachgeschalteten sogenannten Overdrive 13 aufweist. Dieser Overdrive 13 kann je nach eingelegter Gangstufe des Differenzialwandlergetriebes 12 in wenigstens zwei unterschiedliche Schaltstellungen gebracht werden, um so die an der Ausgangswelle 10 anliegende Übersetzung nochmals zu verändern. Dieses Schalten des Overdrive 13 erfolgt typischerweise über Klauenschaltelemente, wobei ein solches Klauenschaltelement 14 mit zwei Klauen rein beispielhaft im Bereich des Overdrives 13 angedeutet ist.

Das Getriebesystem umfasst außerdem einen Drehzahlsensor 15, welcher mit der Eingangswelle 9 in Verbindung steht, sowie einen Drehzahlsensor 16, welcher mit der Ausgangswelle 10 verbunden ist. Ferner ist ein Neigungssensor 17 in dem Getriebesystem verbaut. Alle Sensoren 15, 16, 17 liefern Daten an die Steuereinheit 6 des Getriebesystems und helfen dieser bei der Steuerung bzw. Regelung der Abläufe innerhalb des Getriebes 5.

Idealerweise ist die Eingangswelle 9 dabei über einen Drehschwingungsdämpfer mit der Kurbelwelle der Verbrennungskraftmaschine 3 verbunden. Eine schaltbare Kupplung im Bereich zwischen der Eingangswelle 9 und der Kurbelwelle kann prinzipiell ebenfalls vorgesehen sein. Der Aufbau funktioniert jedoch besonders einfach und effizient, wenn auf eine schaltbare Kupplung im Bereich der Eingangswelle 9 verzichtet wird. Die Verbrennungskraftmaschine 3 kann eine beliebige Verbrennungskraftmaschine 3 sein. Häufig wird diese im Bereich von Nutzfahrzeugen als Dieselkraftmaschine ausgebildet sein. Sie kann jedoch auch als andersartige Verbrennungskraftmaschine ausgestaltet sein, beispielsweise als Gasmotor. Insbesondere solche Gasmotoren sind hinsichtlich der Ansteuerung sehr komplex und weitaus schwieriger exakt anzusteuern, als dies beispielsweise Dieselmotoren sind. Das nachfolgende Verfahren ist für beide Varianten geeignet. Insbesondere kann es jedoch auch bei dem schwer ansteuerbaren Gasmotor eine außerordentlich einfache, effiziente und wirkungsvolle Schaltung des Klauenschaltelements 14 realisieren.

Kommt nun über ein Datenbussystem 18, welches insbesondere als CAN-Bus ausgebildet sein kann, eine Schaltanforderung zu der Steuereinheit 6 des Getriebesystems oder wird von diesem selbst generiert, dann liegen zu diesem Zeitpunkt typischerweise Lasten im Bereich des Klauenschaltelements 14 an, sodass dieses nicht einfach ausgerückt werden kann, insbesondere da ein ungewolltes Ausrücken der einzelnen Klauen durch geeignete Hinterschneidungen im Normalfall verhindert wird. Ausgehend von der Steuereinheit 6 des Getriebesystems kann nun über den Frequenzumrichter 7 die elektrische Maschine 4 in der Art angesteuert werden, dass die Last im Bereich des Klauenschaltelements 4 reduziert und idealerweise zu null wird. Hierfür wird über die elektrische Maschine 4 beispielsweise im generatorischen Betrieb die Verbrennungskraftmaschine 3 abgebremst. Dabei anfallende Energie wandert über den Frequenzumrichter 7 in die Energiespeichereinrichtung 8. Ist eine Erhöhung des Drehmoments bzw. der Drehzahl der Verbrennungskraftmaschine 3 notwendig um die Last zu reduzieren, dann kann dies ebenfalls über die elektrische Maschine 4, in dem Fall dann im motorischen Betrieb, erfolgen. Die hierfür notwendige elektrische Leistung stammt wiederum aus der Energiespeichereinrichtung 8.

Alleine ausgehend vom Getriebesystem, und ohne dass in die Motorsteuerung der Verbrennungskraftmaschine 3 eingegriffen werden muss, kann das gewünschte Drehmoment bzw. die gewünschte Drehzahl der Eingangswelle 9 also eingestellt werden. Das Getriebesystem schafft sich seine idealisierten Bedingungen also quasi durch einen Eingriff mit der elektrischen Maschine 4 auf die Eingangswelle 9 selbst. Über den Drehzahlsensor 15 kann die gewünschte Drehzahl überwacht werden. Im Idealfall liegt nun nur noch ein sehr kleines Moment oder vorzugsweise gar kein Drehmoment mehr zwischen den Klauen des Klauenschaltelements 14 an. Dieses kann dann einfach ausgerückt werden. Nun kann über die elektrische Maschine 4 wiederum die Zieldrehzahl, und hier vorzugsweise die Zieldrehzahl im Bereich der Ausgangswelle 10, welche von dem Drehzahlsensor 16 erfasst werden kann, eingestellt werden. Hierfür wird wiederum beispielsweise im motorischen Betrieb der elektrischen Maschine 4 die Verbrennungskraftmaschine 3 beschleunigt oder im generatorischen Betrieb derselben abgebremst. Letztlich führt dies zur gewünschten Zieldrehzahl der Ausgangswelle 10. Bei dieser Zieldrehzahl wird dann das Klauenschaltelement 14 bzw. seine beiden Klauen wieder eingerückt, was wiederum ohne nennenswerte Drehzahldifferenz lastfrei erfolgen kann, sodass insgesamt eine außerordentlich schnelle und effiziente Schaltung möglich ist. Das Klauenschaltelement 14 kann, wie es auch bei bisherigen Klauenschaltelementen üblich ist, mechanische Synchronisationseinrichtungen aufweisen, welche ein Einrücken auch bereits bei Drehzahldifferenzen erlauben. Durch das beschriebene Verfahren lassen sich diese Drehzahldifferenzen jedoch deutlich minimieren, sodass das Einrücken außerordentlich schnell und effizient möglich wird. Insbesondere werden Reibungsverluste minimiert, was zu einer verbesserten Energienutzung einerseits und zu einem verringerten Verschleiß andererseits führt.

Das Klauenschaltelement 14 lässt sich damit in allen Betriebssituationen des Getriebesystems und damit des Hybridfahrzeugs 2 nutzen, was gegenüber der herkömmlichen Nutzung einen entscheidenden Vorteil darstellt. Die Nutzung erfolgt dabei außerordentlich schnell und effizient, sodass eine sehr schnelle und verbrauchsoptimierte Schaltung möglich wird. Darüber hinaus wird durch die verkürzte Schaltzeit der Fahrkomfort erhöht.

## Patentansprüche

1. Verfahren zum Schalten eines Klauenschaltelements (14) eines Getriebesystems in einem Hybridfahrzeug (2), mit
1.1 einer mit einer Kurbelwelle einer Verbrennungskraftmaschine (3) des Hybridfahrzeugs (2) verbundenen Eingangswelle (9);
1.2 einer zumindest mittelbar mit angetriebenen Rädern (11) des Hybridfahrzeugs (2) verbundenen Ausgangswelle (10);
1.3 einer elektrischen Maschine (4), welche mit der Eingangswelle (9) in Eingriff steht;
1.4 einem Automatikgetriebe (5) oder einem automatisiert schaltbaren Getriebe zwischen der Eingangswelle (9) und der Ausgangswelle (10), welches
1.4.1 wenigstens ein Klauenschaltelement (14) zum lösbaren Koppeln von zwei Getriebeelementen aufweist, wobei
1.5 bei einer gewünschten Schaltung des Klauenschaltelements (14) über die elektrische Maschine (4) das Drehmoment der Eingangswelle (9) angepasst wird, sodass
1.6 im Bereich des Klauenschaltelements (14) eine reduzierte Last anliegt und dieses ausgerückt werden kann, wonach
1.7 die Verbrennungskraftmaschine (3) über die elektrische Maschine (4) auf die gewünschte Zieldrehzahl abgebremst oder beschleunigt wird,
**dadurch gekennzeichnet, dass** danach
1.8 das Klauenschaltelement (14) beim oder kurz vor dem Erreichen der Zieldrehzahl eingerückt wird.

2. Verfahren nach Anspruch 1, **dadurch gekennzeichnet, dass** die Steuerung und Regelung des Schaltvorgangs des Klauenschaltelements (14) über wenigstens eine in dem Getriebesystem integrierte Steuereinheit (6) für das Getriebe (5) und die elektrische Maschine (4) erfolgt.

3. Verfahren nach Anspruch 1 oder 2, **dadurch gekennzeichnet, dass** die Last an dem Klauenschaltelement (14) vor dem Ausrücken auf Null reduziert wird.

4. Verfahren nach Anspruch 1, 2 oder 3, **dadurch gekennzeichnet, dass** die Zieldrehzahl an der Ausgangswelle (10) bestimmt wird.

5. Verfahren nach einem der Ansprüche 2 bis 4, **dadurch gekennzeichnet, dass** die Eingangswelle (9) und die Ausgangswelle (10) mit jeweils einem Drehzahlsensor (15, 16) versehen sind, wobei die Drehzahlsensoren (15, 16) die erfassten Drehzahlen an die in das Getriebesystem integrierte Steuereinheit (6) liefern.

6. Verfahren nach einem der Ansprüche 2 bis 5, **dadurch gekennzeichnet, dass** in dem Getriebesystem ein Neigungssensor (17) angeordnet ist, welcher seine erfassten Daten an die in das Getriebesystem integrierte Steuereinheit (6) liefert.

7. Verfahren nach einem der Ansprüche 1 bis 6, **dadurch gekennzeichnet, dass** als Getriebe (5) ein Differenzialwandlergetriebe (12) eingesetzt wird, welches mit einem Overdrive (13) versehen ist, dessen Übersetzungsänderung über das Klauenschaltelement (14) zuschaltbar ist.

8. Verfahren nach einem der Ansprüche 1 bis 7, **dadurch gekennzeichnet, dass** als Verbrennungskraftmaschine (3) in dem Hybridfahrzeug (2) ein Gasmotor verwendet wird.

9. Verfahren nach einem der Ansprüche 1 bis 8, **dadurch gekennzeichnet, dass** die Eingangswelle (9) direkt oder über einen Drehschwingungsdämpfer mit der Kurbelwelle der Verbrennungskraftmaschine (3) verbunden ist.

## Claims

1. Method for performing shifts in a dog clutch element (14) of a transmission system in a hybrid vehicle (2), having
1.1 an input shaft (9) which is connected to a crankshaft of an internal combustion engine (3) of the hybrid vehicle (2);
1.2 an output shaft (10) which is connected at least indirectly to driven wheels (11) of the hybrid vehicle (2) ;
1.3 an electric machine (4) which is in engagement with the input shaft (9);
1.4 an automatic transmission (5) or a transmission which is shiftable in an automated manner between the input shaft (9) and the output shaft (10), which transmission
1.4.1 has at least one dog clutch element (14) for the releasable coupling of two transmission elements,
wherein
1.5 during a desired shifting of the dog clutch element (14), the torque of the input shaft (9) is adapted via the electric machine (4), and therefore
1.6 a reduced load prevails in the region of the dog clutch element (14) and the latter can be disengaged, after which
1.7 the internal combustion engine (3) is braked or accelerated to the desired target rotational speed via the electric machine (4), **characterized in that** after this
1.8 the dog clutch element (14) is engaged when or shortly before the target rotational speed is reached.

2. Method according to Claim 1, **characterized in that** the shifting operation of the dog clutch element (14) is controlled and regulated via at least one control unit (6), which is integrated in the transmission system, for the transmission (5) and the electric machine (4).

3. Method according to Claim 1 or 2, **characterized in that** the load on the dog clutch element (14) is reduced to zero before the disengagement.

4. Method according to Claim 1, 2 or 3, **characterized in that** the target rotational speed is determined at the output shaft (10).

5. Method according to one of Claims 2 to 4, **characterized in that** the input shaft (9) and the output shaft (10) are provided with one rotational speed sensor (15, 16) each, wherein the rotational speed sensors (15, 16) supply the sensed rotational speeds to the control unit (6) integrated in the transmission system.

6. Method according to one of Claims 2 to 5, **characterized in that** an inclination sensor (17) is arranged in the transmission system, said inclination sensor supplying its sensed data to the control unit (6) integrated in the transmission system.

7. Method according to one of Claims 1 to 6, **characterized in that** the transmission (5) used is a differential converter transmission (12) which is provided with an overdrive (13), the change in transmission ratio of which can be switched on via the dog clutch element (14).

8. Method according to one of Claims 1 to 7, **characterized in that** a gas engine is used as the internal combustion engine (3) in the hybrid vehicle (2).

9. Method according to one of Claims 1 to 8, **characterized in that** the input shaft (9) is connected directly or via a torsional vibration damper to the crankshaft of the internal combustion engine (3).

## Revendications

1. Procédé de commutation d'un élément de commutation à crabots (14) d'un système de transmission dans un véhicule hybride (2), avec
1.1 un arbre d'entrée (9) relié à un vilebrequin d'un moteur à combustion interne (3) du véhicule hybride (2) ;
1.2 un arbre de sortie (10) relié au moins indirectement à des roues motrices (11) du véhicule hybride (2) ;
1.3 une machine électrique (4) qui est en prise avec l'arbre d'entrée (9) ;
1.4 une transmission automatique (5) ou une transmission commutable de manière automatisée entre l'arbre d'entrée (9) et l'arbre de sortie (10), qui
1.4.1 présente au moins un élément de commutation à crabots (14) pour coupler de manière amovible deux éléments de transmission,
1.5 lors d'une commutation souhaitée de l'élément de commutation à crabots (14) par l'intermédiaire de la machine électrique (4), le couple de l'arbre d'entrée (9) étant adapté de telle sorte
1.6 qu'une charge réduite est appliquée dans la zone de l'élément de commutation à crabots (14) et celui-ci peut être débrayé, après quoi
1.7 le moteur à combustion interne (3) est freiné ou accéléré par l'intermédiaire de la machine électrique (4) jusqu'à la vitesse de rotation cible souhaitée, **caractérisé en ce qu'**ensuite
1.8 l'élément de commutation à crabots (14) est embrayé au moment ou juste avant que la vitesse de rotation cible ne soit atteinte.

2. Procédé selon la revendication 1, **caractérisé en ce que** la commande et la régulation de l'opération de commutation de l'élément de commutation à crabots (14) s'effectuent par l'intermédiaire d'au moins une unité de commande (6) intégrée dans le système de transmission pour la transmission (5) et la machine électrique (4).

3. Procédé selon la revendication 1 ou 2, **caractérisé en ce que** la charge sur l'élément de commutation à crabots (14) est réduite à zéro avant le débrayage.

4. Procédé selon la revendication 1, 2 ou 3, **caractérisé en ce que** la vitesse de rotation cible est déterminée sur l'arbre de sortie (10).

5. Procédé selon l'une quelconque des revendications 2 à 4, **caractérisé en ce que** l'arbre d'entrée (9) et l'arbre de sortie (10) sont munis chacun d'un capteur de vitesse de rotation (15, 16), les capteurs de vitesse de rotation (15, 16) fournissant les vitesses de rotation détectées à l'unité de commande (6) intégrée dans le système de transmission.

6. Procédé selon l'une quelconque des revendications 2 à 5, **caractérisé en ce qu'**un capteur d'inclinaison (17) est agencé dans le système de transmission, lequel fournit ses données détectées à l'unité de commande (6) intégrée dans le système de transmission.

7. Procédé selon l'une quelconque des revendications 1 à 6, **caractérisé en ce qu'**on utilise en tant que transmission (5) une transmission à convertisseur différentiel (12) qui est pourvue d'un overdrive (13) dont le changement de rapport peut être enclenché par l'intermédiaire de l'élément de commutation à crabots (14) .

8. Procédé selon l'une quelconque des revendications 1 à 7, **caractérisé en ce qu'**on utilise en tant que moteur à combustion interne (3) dans le véhicule hybride (2) un moteur à gaz.

9. Procédé selon l'une quelconque des revendications 1 à 8, **caractérisé en ce que** l'arbre d'entrée (9) est relié directement ou par l'intermédiaire d'un amortisseur de vibrations de torsion au vilebrequin du moteur à combustion interne (3).
